# FASCICULE DE BREVET EUROPEEN

(11) **EP 2 794 055 B1**
(45) Date de publication et mention de la délivrance du brevet: **28.06.2017**
(21) Numéro de dépôt: 12823107.3
(22) Date de dépôt: 20.12.2012
(51) Int. Cl.: B01D 36/00

(54) **DISPOSITIF DE VIDANGE**
DRAINAGEVORRICHTUNG
DRAINING DEVICE

(30) Priorité: 23.12.2011 FR 1162428
(43) Date de publication de la demande: 29.10.2014
(73) Titulaire: Parker Hannifin Manufacturing Switzerland SA, 1227 Carouge (CH)
(72) Inventeur: ZUCCONE, Louis, CH-1213 Onex (CH)
(74) Mandataire: Bugnion Genève
(86) Numéro de dépôt international: PCT/IB2012/057529
(87) Numéro de publication internationale: WO 2013/093835

(56) Documents cités:
- EP-A1- 1 642 632
- EP-B1- 1 521 910
- DE-A1-102009 052 301

## Description

La présente invention concerne un dispositif de vidange destiné à assurer l'évacuation de l'eau contenue dans un collecteur de filtre de carburant, comprenant une électrovanne de vidange comportant un corps de vanne muni d'un canal de vidange, un enroulement de bobine, un piston agencé pour être mobile entre une position passive de fermeture du canal de vidange, et une position active d'ouverture permettant la vidange de l'eau, le mouvement du piston étant commandé par la bobine.

Il est connu que les carburants et plus précisément le carburant pour moteur diesel contiennent de l'eau. Avant que le carburant rentre dans le moteur, il passe par un filtre et l'eau est séparée du carburant et ramassée dans un collecteur situé sous le filtre. Il faut de temps à autre vider le collecteur d'eau. Au début on procédait à la vidange du collecteur en appuyant sur un poussoir et l'eau collectée s'écoulait par gravité. Mais, d'une part, l'accès au collecteur n'est pas toujours facile et d'autre part si l'on oublie de vidanger le filtre il risque de se noyer dans l'eau collectée et perdre son efficacité.

Dans le EP 1 521 910, on décrit une électrovanne qui permet de commander à distance la vidange du collecteur par gravité tout en assurant une entrée d'air par des orifices spécifiques pour faciliter et accélérer l'évacuation de l'eau collectée. Dans ce dispositif l'eau s'écoule vers l'extérieur en traversant le canal de vidange qui se trouve à l'intérieur de la bobine de l'électrovanne et dans lequel se déplace une tige de piston pour ouvrir ou fermer le canal de vidange. L'électrovanne en question est montée au dessous du collecteur après la fabrication de ce dernier. Ce montage de l'électrovanne et la mise en place des connections électriques et joints d'étanchéité après la fabrication du collecteur demande un travail supplémentaire de montage et de manutention de différents éléments. D'autre part, l'électrovanne en question est plutôt encombrante et il faut faire attention lors du montage d'assurer une bonne étanchéité d'autant plus que le canal de vidange se trouve à l'intérieur de la bobine.

Le DE 10 2009 052301 A1 propose une électrovanne reprenant les caractéristiques techniques du préambule de la revendication 1.

La présente invention a pour but de proposer un dispositif de vidange palliant les inconvénients précités.

Le dispositif de vidange selon l'invention est caractérisé par le fait que le corps de vanne comprend une première partie venant d'une pièce avec le collecteur dudit filtre, la bobine et le circuit électrique étant noyés par moulage dans ladite première partie et une second partie montée amovible sur l'extrémité inférieure de la première partie et munie du canal de vidange, qu'à l'intérieur de la bobine est monté fixe un premier corps cylindrique en matériau magnétique suivi du piston constitué d'un second corps cylindrique en matériau magnétique espacé axialement du premier par un ressort que ledit second corps magnétique est muni de moyens permettant en position passive de fermer le canal de vidange.

Selon une exécution les moyens permettant en position passive de l'électrovanne de fermer le canal de vidange sont constitués par une garniture d'étanchéité logée dans ledit second corps magnétique et s'appuyant en position passive contre l'entrée du canal de vidange.

Selon une autre exécution la seconde partie dudit corps de vanne, est munie d'au moins un orifice d'entrée d'air et ledit piston est agencé pour fermer, en position passive, l'orifice d'entrée d'air, et l'ouvrir en position active permettant la vidange de l'eau et l'entrée d'air.

Selon une exécution préférée le dit second corps magnétique est solidaire en déplacement d'un corps comprenant un premier passage cylindrique se terminant en position passive contre l'entrée du canal de vidange, ledit premier passage cylindrique abrite à la partie inférieure une garniture d'étanchéité fermant le canal de vidange surmontée d'un ressort qui vient s'appuyer par son autre extrémité contre l'extrémité inférieure du second corps magnétique, que sur une projection radiale dudit premier passage cylindrique est formé un second passage cylindrique situé à la vertical de l'orifice d'entrée d'air, ledit second passage cylindrique est muni sur son extrémité inférieure d'un garniture d'étanchéité fermant l'orifice d'entrée d'air et elle est surmontée d'un ressort dont l'autre extrémité est en butée contre la première partie du corps de vanne.

Selon une autre exécution la seconde partie du corps de vanne est munie d'au moins deux trous d'entrée d'air.

De préférence le dispositif selon l'invention est pourvu d'un détecteur de niveau de l'eau dans le collecteur comprenant deux électrodes reliées par une résistance d'environ 1 MOhm situées dans la parie supérieure du collecteur et proches de axe géométrique de ladite partie supérieure.

Selon une autre exécution la partie supérieure du collecteur est cylindrique et comprend une partie annulaire s'étendant radialement dont la périphérie présente un crantage régulier dont les creux sont en forme de secteur cylindrique, que de part et d'autre de la partie annulaire sont montés tête-bêche deux anneaux identiques comprenant de moyens d'enclipsage formant après l'enclipsage un anneau libre en rotation pourvu sur sa périphérie d'un secteur cylindrique ouvert vers l'extérieur de même rayon que les creux du crantage, et comprenant au moins deux ergots radiaux intérieurs.

L'invention sera décrite plus en détail à l'aide du dessin annexé.
La figure 1 est une coupe verticale d'une exécution du dispositif de vidange conforme à la présente invention;
La figure 2 est une représentation en perspective du dessous du dispositif de vidange ;
La figure 3 est une représentation en perspective d'un anneau ;
La figure 4 est une représentation en perspective du dispositif de la figure 2 muni d'un anneau de tenue pour une gaine de câble électrique;
La figure 5 est une coupe verticale d'une seconde exécution du dispositif de vidange conforme à la présente invention.

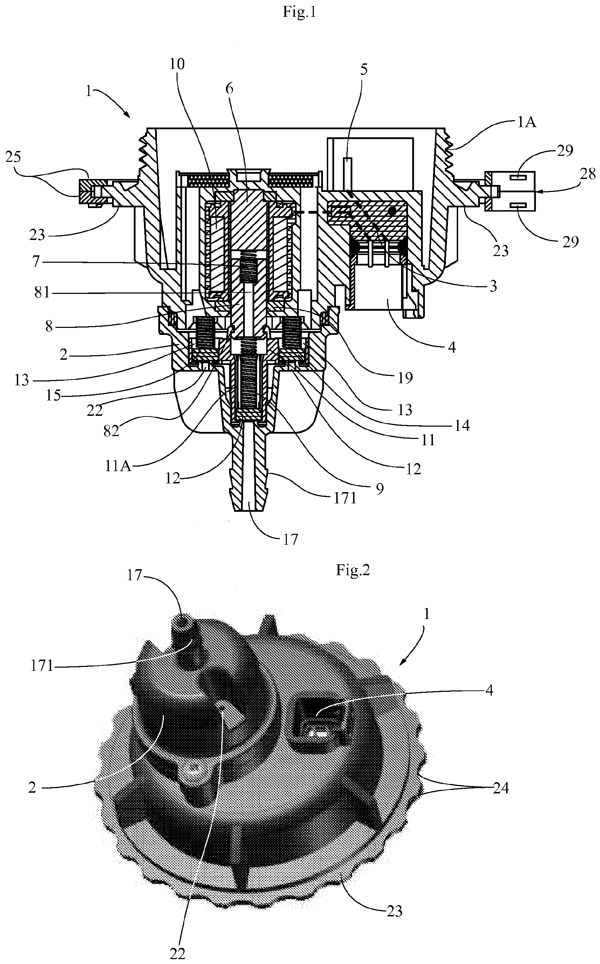

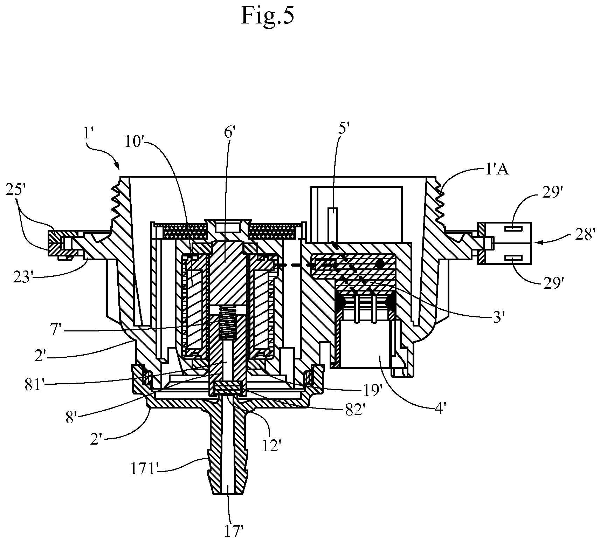

La variante d'exécution illustrée aux figures 1 et 2 diffère de celle illustrée à la figure 5 par le fait que dans la seconde il n'y a pas d'orifice d'entrée d'air ce qui simplifie et rend plus compact le corps de vanne.

Le dispositif de la figure 1 comprend un premier corps de vanne 1 dont la partie supérieure forme une sorte de coupelle cylindrique, qui constitue le collecteur d'eau proprement parlé et qui sera fixé à la partie inférieure du dispositif abritant le filtre. Dans le cas présent un filetage 1A permet de visser le premier corps de vanne 1 au dispositif abritant le filtre, mais d'autres moyens peuvent être utilisés. Une bobine cylindrique 10 et le circuit électrique 3 de connexion et de commande sont noyés par moulage lors de la fabrication du corps 1. Un détecteur de niveau comprenant deux électrodes 5 s'étend dans la partie collectant l'eau tandis que les contacts électriques pour l'alimentation et commande de l'électrovanne aboutissent dans un logement de connexion 4. Les deux électrodes 5 sont reliées par une résistance de l'ordre de 1MOhm. Le but de cette résistance est de pouvoir contrôler de temps à autre en appliquant une tension que le détecteur que le détecteur de niveau fonctionne. De préférence les deux électrodes 5 sont situées le plus près possible de l'axe géométrique de la coupelle afin que la détection du niveau d'eau ne soit pas ou peu influencée par l'éventuelle inclinaison du véhicule ou machine munie de ce dispositif de vidange. Un second corps de vanne 2 vient se fixer de manière amovible (vissage, à cran...) sur la partie inférieure du premier corps de vanne 1. Il comprend au moins deux orifices 22 pour l'entrée d'air et le canal de vidange 17. La partie extérieure 171 du canal de vidange 17 est configurée pour y accoupler un tuyau souple pour l'évacuation de l'eau collectée.

Dans le passage cylindrique de la bobine 10 nous avons un premier corps 6 fait d'un matériau magnétique fixé dans le corps de vanne 1. Il est suivi d'un second corps 8 fait aussi d'un matériau magnétique tandis qu'un ressort 7 partiellement logé dans un passage cylindrique 81 du second corps 8 présentant un épaulement, tend à éloigner les deux corps 6 et 8. Le second corps 8 est solidaire en déplacement d'un moyeu 11 présentant un premier passage cylindrique central 11A et au moins deux passages cylindriques 13 fixées sur des projections radiales du moyeu. Le passage cylindrique central 11A se trouve à la verticale de l'orifice d'entrée du canal de vidange 17. Il est muni sur sa partie inférieure d'une garniture d'étanchéité 12 suivie d'un ressort 9 s'appuyant contre l'extrémité inférieure du second corps 8 en matériau magnétique. Le moyeu 11 est engagé dans une gorge 82 du second corps 8 par un rétrécissement de l'extrémité supérieure du premier passage cylindrique 11A. Une garniture d'étanchéité 19 traversée par le second corps 8 ferme le passage cylindrique de la bobine 10. Les seconds passages cylindriques 13 du moyeu sont disposés à la verticale des orifices d'entrée d'air 22. Ils contiennent à leur extrémité inférieure des garnitures d'étanchéité 14 surmontées des ressorts 15 s'appuyant par leur seconde extrémité contre le premier corps de vanne 1.

Dans la position passive de l'électrovanne nous avons la situation illustrée à la figure. Sous la pression du ressort 7 le piston est à la position inférieure tandis que le ressort 9 pousse la garniture d'étanchéité 12 contre l'orifice du canal de vidange 17 et le ferme hermétiquement. De même les ressorts 15 poussent les garnitures d'étanchéité 14 contre les orifices d'entrée d'air 22 et les ferment hermétiquement.

Lorsqu'un niveau d'eau prédéterminé dans le collecteur est détecté par les électrodes 5 soit automatiquement soit manuellement on alimente la bobine 10. Le second corps 8 en matériau magnétique est attiré vers le premier corps 6 à l'encontre du ressort 7. En se déplaçant vers le haut le second corps 8 entraine le moyeu 11 à l'encontre des ressorts 9 et 13 ce qui permet d'ouvrir l'orifice du canal de vidange 17 et l'eau s'écoule par gravité. Simultanément les orifices d'entrée d'air 22 s'ouvrent aussi et de l'air rentre dans le collecteur au fur et mesure que le niveau de l'eau collectée baisse facilitant ainsi la vidange. Lorsque l'eau s'est écoulée ou après un certain temps l'alimentation de la bobine cesse et sous la pression des ressorts 7, 14, 15 on revient à la position illustrée.

Le nombre des orifices 22 d'entrée d'air peut être supérieur à deux.

La variante d'exécution de la figure 5 comprend un premier corps de vanne 1' dont la partie supérieure est identique à la partie supérieure 1 de la variante d'exécution de la figure 1. Les 1', 1'A, 3', 4', 5', 10', correspondent aux éléments 1, 1A, 3, 4, 5, 10 de du premier corps de vanne 1 de la figure 1. Un second corps de vanne 2' vient se fixer de manière amovible (vissage, à cran...) sur la partie inférieure du premier corps de vanne 1'. Il comprend un canal de vidange 17'. La partie extérieure 171' du canal de vidange 17' est configurée pour y accoupler un tuyau souple pour l'évacuation de l'eau collectée. Le second corps de vanne 2' étant beaucoup plus petit que le second corps de vanne 2 nous obtenons un dispositif moins volumineux, plus simple à fabriquer car tout la partie destinée à l'ouverture et fermeture des orifices 22 n'est plus nécessaire et par conséquent cette exécution est moins coûteuse.

Dans le passage cylindrique de la bobine 10' nous avons les éléments 6', 7', qui sont identiques aux éléments 6, 7. Le second corps 8' comprend un passage cylindrique 81' qui se termine par un élargissement 82' abritant une garniture d'étanchéité 12'.Le passage cylindrique central 81' se trouve à la verticale de l'orifice d'entrée du canal de vidange 17'. Une garniture d'étanchéité 19' traversée par le second corps 8' ferme le passage cylindrique de la bobine 10'.

Dans la position passive de l'électrovanne nous avons la situation illustrée à la figure 5. Sous la pression du ressort 7' le piston est à la position inférieure sous l'action du ressort 7' et la garniture d'étanchéité 12' s'appuie contre l'orifice du canal de vidange 17' et le ferme hermétiquement.

Lorsqu'un niveau d'eau prédéterminé dans le collecteur est détecté par les électrodes 5' soit automatiquement soit manuellement on alimente la bobine 10'. Le second corps 8' en matériau magnétique est attiré vers le premier corps 6' à l'encontre du ressort 7'. En se déplaçant vers le haut le second corps 8' éloigne la garniture d'étanchéité 12' de l'orifice du canal 17' permettant que l'eau s'écoule. Lorsque l'eau s'est écoulée ou après un certain temps l'alimentation de la bobine cesse et sous la pression du ressort 7', on revient à la position illustrée. Pour compenser l'absence d'orifice d'entré d'air sur le second corps 2' nous avons deux possibilités. L première consiste à appliquer une pression dans le collecteur en utilisant par exemple la pompe à injection du carburant ce qui permet de chasser l'au collectée lorsque le canal de vidange est ouvert. La seconde possibilité est que le corps du collecteur du filtre situé au dessus de premier corps de vanne 1' on crée deux ou trois orifices qui permettent l'entrée d'air. Bien entendu cette solution convient seulement si les exigences de sécurité le permettent.

Les avantages de ces dispositifs en comparaison avec l'électrovanne du EP 1 521 910 sont :
- Coût de fabrication diminué car il n'est plus nécessaire de monter l'électrovanne sur le collecteur d'eau du filtre après sa fabrication et procéder aux différentes connections électriques et mise en place des joints d'étanchéité.
- L'électrovanne en elle-même est plus simple et moins encombrante, elle n'a pas de tige de piston
- L'électrovanne demande moins de puissance pour fonctionner car aucune partie du piston n'est soumise à la pression de l'eau.
- Une grande partie de l'électrovanne n'est pas en contact avec l'eau car uniquement la partie extérieure de l'extrémité inférieure du piston est contact avec l'eau.
- Par sa construction les fuites extérieures sont limitées.

Une gaine contenant un câble électrique assurant l'alimentation et la commande de l'électrovanne muni d'un connecteur adéquat enfiché dans le logement de connexion 4, 4' doit être tenue près du corps de vanne aussi bien lors de la première installation et suite aux travaux de maintenance. Le but est d'éviter que cette gaine soit accrochée accidentellement ou vient se mêler à d'autres câbles ou éléments du moteur. Il existe bien sûr de tels dispositifs que l'on peut fixer sur le corps de l'électrovanne de manière permanent ou amovibles. Néanmoins, lorsqu'on prévoit un tel dispositif à un endroit précis du corps de la vanne sa position après le visage du corps 1 sur le corps supérieure risque de ne pas être à la position souhaitée.

L'inventeur a cherché une solution facile à mettre en oeuvre et permettant de choisir la position de tenue de la gaine librement.

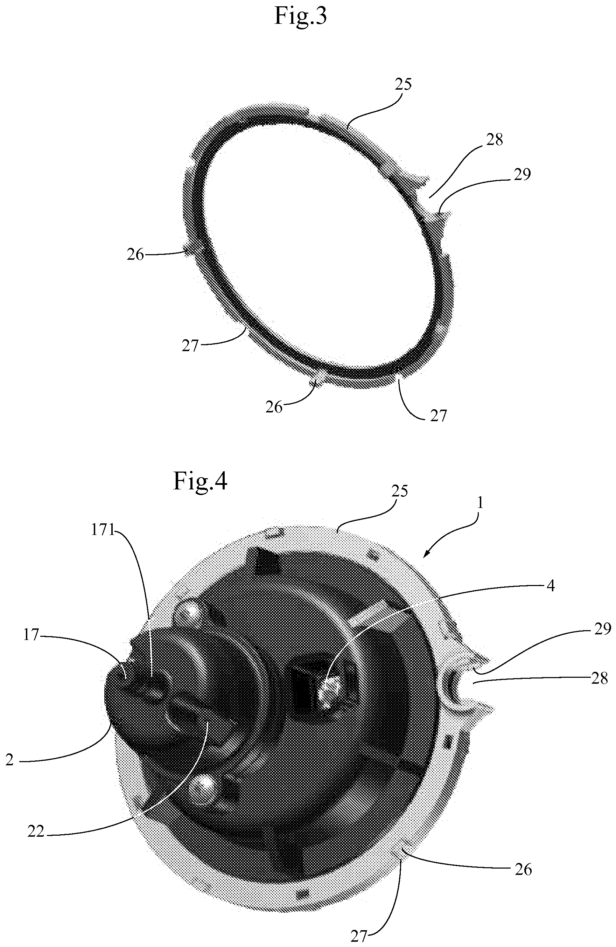

Dans un premier temps on a muni la partie supérieure du collecteur qui est cylindrique d'une partie annulaire 23, 23' (figure 1, 2, 5) s'étendant radialement. La périphérie de cette partie annulaire 23, 23' présente un crantage régulier dont les creux 24 sont en forme de secteur cylindrique. Ensuite on utilise deux anneaux identiques 25, 25' (figure 1, 3, 5) que l'on monte tête-bêche de part d'autre de la partie annulaire 23, 23' (figure 4).

Chaque anneau 25, 25' présente plusieurs ergots d'enclipsage 26 régulièrement repartis destinés à collaborer avec des encoches correspondantes 27 de l'autre anneau pour les tenir ensemble formant après l'enclipsage un anneau libre en rotation. Chaque anneau 25, 25' comprend sur sa périphérie in secteur cylindrique s'étendant sur une longueur périphérique légèrement supérieure à une demi-circonférence de même rayon que le secteur cylindrique 24 du crantage. Chaque secteur cylindrique 28, 28' comprend deux ergots radiaux 29, 29'. Les dimensions de deux anneaux 25, 25' permettent à l'anneau formé par l'enclipsage des anneaux 25, 25' de part et d'autre de la partie annulaire 23, 23' de rester fixe axialement mais libre en rotation (fig 4). Lorsque le corps de valve est monté sur le corps supérieur contenant le filtre on tourne l'anneau composé de deux anneaux 25, 25' jusqu'à ce que le secteur cylindrique vienne à la position souhaitée de sorte que le secteur cylindrique se trouve dans un secteur cylindrique 23, 23' du crantage. Ensuite on force la gaine dans le secteur cylindrique 28, 28'. La gaine est souple et sa surface extérieure comprend de gorges annulaires dans lesquels viennent se loger les ergots 29, 29'. Ainsi, d'une part, la gaine est tenue, et d'autre part l'anneau est bloqué en rotation

## Revendications

1. Dispositif de vidange destiné à assurer l'évacuation de l'eau contenue dans un collecteur de filtre de carburant, comprenant une électrovanne de vidange comportant un corps de vanne (1', 2';1, 2) muni d'un canal de vidange (17'; 17), un enroulement de bobine (10';10) et un circuit électrique (3',3) de connexion et de commande, un piston (8', 12'; 8, 9, 11, 12, 13, 14, 15) agencé pour être mobile entre une position passive de fermeture du canal de vidange (17';17) et une position active d'ouverture permettant la vidange de l'eau, le mouvement du piston étant commandé par la bobine, **caractérisé par le fait que** le corps de vanne comprend une première partie (1'; 1) venant d'une pièce avec le collecteur dudit filtre, la bobine (10';10) et le circuit électrique (3';3) étant noyés par moulage dans ladite première partie (1';1) et une seconde partie (2';2) montée amovible sur l'extrémité inférieure de la première partie (1';1) et munie du canal de vidange (17';17), qu'à l'intérieur de la bobine (10 ; 10') est monté fixe un premier corps cylindrique (6 ; 6') en matériau magnétique suivi du piston constitué d'un second corps cylindrique (8 ; 8') en matériau magnétique espacé axialement du premier par un ressort (7 ; 7'), que ledit second corps magnétique (8 ; 8') est muni de moyens (9, 11, 12; 12') permettant en position passive de fermer le canal de vidange (17 ;17').

2. Dispositif selon la revendication 1, **caractérisé par le fait que** les moyens (12') permettant en position passive de l'électrovanne de fermer le canal de vidange (17') sont constitués par une garniture d'étanchéité (12') logée dans ledit second corps magnétique (8') et s'appuyant en position passive contre l'entrée du canal de vidange (17').

3. Dispositif de vidange selon la rev**endication** 1, **caractérisé par le fait que** la seconde partie (2) dudit corps de vanne, est munie d'au moins un orifice d'entrée d'air (22), que ledit piston (8, 9, 11, 12, 13, 14, 15) est agencé pour fermer, en position passive, l'orifice d'entrée d'air (22), et l'ouvrir en position active permettant la vidange de l'eau et l'entrée d'air.

4. Dispositif selon la revendication 3, **caractérisé par le fait que** le dit second corps magnétique (8) est solidaire en déplacement d'un corps (11, 13) comprenant un premier passage cylindrique (11) se terminant en position passive contre l'entrée du canal de vidange (17), ledit premier passage cylindrique (11) abrite à la partie inférieure une garniture d'étanchéité (12) fermant le canal de vidange (17) surmontée d'un ressort (9) qui vient s'appuyer par son autre extrémité contre l'extrémité inférieure du second corps magnétique (7), que sur une projection radiale dudit premier passage cylindrique (11) est formé un second passage cylindrique (13) situé à la vertical de l'orifice d'entrée d'air (22), ledit second passage cylindrique (13) est muni sur son extrémité inférieure d'une garniture d'étanchéité (14) fermant l'orifice d'entrée d'air (22) et elle est surmontée d'un ressort (14) dont l'autre extrémité est en butée contre la première partie du corps de vanne (1).

5. Dispositif selon l'une des revendications 3 ou 4, **caractérisé par le fait que** la seconde partie (2) du corps de vanne est munie d'au moins deux trous d'entrée d'air (22).

6. Dispositif selon l'une des revendications 1 à 5, **caractérisé par le fait que** qu'il est pourvu d'un détecteur de niveau de l'eau dans le collecteur comprenant deux électrodes (5';5) reliées par une résistance d'environ 1 MOhm situées dans la parie supérieure du collecteur et proches de l'axe géométrique de ladite partie supérieure.

7. Dispositif selon l'une des revendications 1 à 6 **caractérisé par le fait que** la partie supérieure du collecteur est cylindrique et comprend une partie annulaire (23';23) s'étendant radialement dont la périphérie présente un crantage régulier dont les creux (24';24) sont en forme de secteur cylindrique, que de part et d'autre de la partie annulaire (23',23) sont montés tête-bêche deux anneaux identiques (25';25) comprenant de moyens d'enclipsage (26,27) formant après l'enclipsage un anneau libre en rotation pourvu sur sa périphérie d'un secteur cylindrique (28';28) ouvert vers l'extérieur de même rayon que les creux du crantage (24), et comprenant au moins deux ergots (29';29) radiaux intérieurs.

## Patentansprüche

1. Drainagevorrichtung, die bestimmt ist, das in einem Kraftstofffilterkollektor enthaltene Wasser zu entfernen, umfassend ein Drainage-Elektroventil, aufweisend einen Ventilkörper (1', 2'; 1, 2), der mit einem Drainagekanal (17'; 17) ausgestattet ist, eine Spulenwicklung (10'; 10) und einen Anschluss- und Steuerstromkreis (3', 3), einen Kolben (8', 12'; 8, 9, 11, 12, 13, 14, 15), der ausgebildet ist, um zwischen einer passiven Verschlussposition des Drainagekanals (17'; 17) und einer aktiven Öffnungsposition, die die Drainage des Wassers erlaubt, bewegbar zu sein, wobei die Bewegung des Kolbens von der Spule gesteuert wird, **dadurch gekennzeichnet, dass** der Ventilkörper einen ersten Teil (1'; 1) umfasst, der mit dem Kollektor des Filters einstückig ist, wobei die Spule (10'; 10) und der Stromkreis (3'; 3) in den ersten Teil (1'; 1) eingeformt sind, und einen zweiten Teil (2';2), der lösbar auf dem unteren Ende des ersten Teils (1'; 1) montiert ist und mit dem Drainagekanal (17'; 17) ausgestattet ist, dass im Innern der Spule (10 ; 10') ein erster zylindrischer Körper (6; 6') aus magnetischem Material fest montiert ist, gefolgt von dem Kolben, der von einem zweiten zylindrischen Körper (8; 8') aus magnetischem Material gebildet ist, axial beabstandet vom ersten mittels einer Feder (7; 7'), dass der zweite magnetische Körper (8; 8') mit Mitteln (9, 11, 12; 12') ausgestattet ist, die erlauben, in passiver Position den Drainagekanal (17; 17') zu schließen.

2. Vorrichtung nach Anspruch 1, **dadurch gekennzeichnet, dass** die Mittel (12'), die erlauben, in passiver Position des Elektroventils den Drainagekanal (17') zu schließen, von einer Dichtungsgarnitur (12') gebildet sind, die im zweiten magnetischen Körper (8') untergebracht ist und sich in passiver Position am Eingang des Drainagekanals (17') abstützt.

3. Drainagevorrichtung nach Anspruch 1, **dadurch gekennzeichnet, dass** der zweite Teil (2) des Ventilkörpers mit mindestens einer Lufteintrittsöffnung (22) ausgestattet ist, dass der Kolben (8, 9, 11, 12, 13, 14, 15) ausgebildet ist, um in passiver Position die Lufteintrittsöffnung (22) zu schließen und sie in aktiver Position zu öffnen, was die Drainage des Wassers und den Einlass von Luft erlaubt.

4. Vorrichtung nach Anspruch 3, **dadurch gekennzeichnet, dass** der zweite magnetische Körper (8) in Verlagerung eines Körpers (11, 13) fest verbunden ist, der einen ersten zylindrischen Durchgang (11) umfasst, der in passiver Position am Einlass des Drainagekanals (17) endet, wobei der erste zylindrische Durchgang (11) im unteren Teil eine Dichtungsgarnitur (12) beherbergt, die den Drainagekanal (17) schließt, mit einer Feder (9) darüber, die sich mit ihrem anderen Ende am unteren Ende des zweiten magnetischen Körpers (7) abstützt, dass über einer radialen Projektion des ersten zylindrischen Durchgangs (11) ein zweiter zylindrischer Durchgang (13) gebildet ist, der sich in der Vertikalen der Lufteintrittsöffnung (22) befindet, wobei der zweite zylindrische Durchgang (13) an seinem unteren Ende mit einer Dichtungsgarnitur (14) ausgestattet ist, welche die Lufteintrittsöffnung (22) verschließt und mit einer Feder (14) darüber, deren anderes Ende am ersten Teil des Ventilkörpers (1) in Anschlag ist.

5. Vorrichtung nach einem der Ansprüche 3 oder 4, **dadurch gekennzeichnet, dass** der zweite Teil (2) des Ventilkörpers mit mindestens zwei Lufteingangslöchern (22) ausgestattet ist.

6. Vorrichtung nach einem der Ansprüche 1 bis 5, **dadurch gekennzeichnet, dass** ein Wasserstandsdetektor im Kollektor vorgesehen ist, umfassend zwei Elektroden (5'; 5), die mit einem Widerstand von zirka 1 MOhm verbunden sind, die sich im oberen Teil des Kollektors und in der Nähe der geometrischen Achse des oberen Teils befinden.

7. Vorrichtung nach einem der Ansprüche 1 bis 6, **dadurch gekennzeichnet, dass** der obere Teil des Kollektors zylindrisch ist und einen ringförmigen Teil (23'; 23) umfasst, der sich radial erstreckt, dessen Umfang eine regelmäßige Kerbung aufweist, deren Senken (24', 24) wie ein zylindrischer Sektor geformt sind, dass beiderseits des ringförmigen Teils (23', 23) zwei identische Ringe (25'; 25) entgegengesetzt montiert sind, umfassend Klipsmittel (26, 27), die nach dem Klipsen einen frei drehenden Ring bilden, der auf seinem Umfang mit einem zylindrischen Sektor (28'; 28) ausgestattet ist, der nach außen offen ist, mit demselben Radius wie die Kerbungssenken (24), und mindestens zwei innere radiale Sporne (29'; 29) umfasst.

## Claims

1. An emptying device designed to ensure the evacuation of water contained in a fuel filter collector, comprising an emptying solenoid valve including a valve body (1', 2'; 1, 2) provided with an emptying channel (17'; 17), a coil winding (10'; 10) and an electric connection and control circuit (3';3), a piston (8', 12'; 8, 9, 11, 12, 13, 14, 15) arranged to be movable between a passive closed position of the emptying channel (17'; 17) and an active open position allowing the emptying of water, the movement of the piston being commanded by the coil, **characterized in that** the valve body comprises a first part (1'; 1) integral with the collector of said filter, the coil (10'; 10) and the electric circuit (3'; 3) being embedded by molding in said first part (1'; 1) and a second part (2'; 2) mounted removably on the lower end of the first part (1'; 1) and provided with the emptying channel (17'; 17), **in that** inside the coil (10; 10'), fixedly mounted is a first cylindrical body (6; 6') made from a magnetic material followed by the piston made up of a second cylindrical body (8; 8') made from a magnetic material axially spaced apart from the first by a spring (7; 7'), and **in that** said second magnetic body (8; 8') is provided with means (9, 11, 12; 12') making it possible to close the emptying channel (17; 17') in the passive position.

2. The device according to claim 1, **characterized in that** the means (12') making it possible, in the passive position, for the solenoid valve to close the emptying channel (17') are made up of a gland packing (12') housed in said second magnetic body (8') and pressing, in the passive position, against the inlet of the emptying channel (17').

3. The emptying device according to claim 1, **characterized in that** the second part (2) of said valve body is provided with at least one air intake orifice (22), **in that** said piston (8, 9, 11, 12, 13, 14, 15) is arranged to close the air intake orifice (22) in the passive position, and to open it in the active position, allowing the emptying of water and the intake of air.

4. The device according to claim 3, **characterized in that** said second magnetic body (8) is secured in movement with a body (11, 13) comprising a first cylindrical passage (11) ending in the passive position against the inlet of the emptying channel (17), said first cylindrical passage (11) houses, in its lower part, a gland packing (12) closing the emptying channel (17) topped by a spring (9) that presses by its other end against the lower end of the second magnetic body (7), **in that** on a radial projection of said first cylindrical passage (11), a second cylindrical passage (13) is formed situated at the vertical of the air intake orifice (22), said second cylindrical passage (13) is provided, on its lower end, with a gland packing (14) closing the air intake orifice (22) and it is topped by a spring (14) whereof the other end abuts against the first part of the valve body (1).

5. The device according to one of claims 3 or 4, **characterized in that** the second part (2) of the valve body is provided with at least two air intake holes (22).

6. The device according to one of claims 1 to 5, **characterized in that** it is provided with a level sensor for the water in the collector comprising two electrodes (5'; 5) connected by a resistance of approximately 1 MOhm situated in the upper part of the collector and close to the geometric axis of said upper part.

7. The device according to one of claims 1 to 6, **characterized in that** the upper part of the collector is cylindrical and comprises an annular part (23'; 23) extending radially whereof the periphery has regular notches whereof the hollows (24'; 24) are in the shape of a cylindrical sector, on either side of the annular part (23', 23), two identical rings (25'; 25) are mounted head to tail comprising clipping means (26, 27) forming, after clipping, a freely rotating ring provided on its periphery with a cylindrical sector (28'; 28) open toward the outside with the same radius as the hollows of the notching (24), and comprising at least two inner radial lugs (29'; 29).
